(19) Europäisches Patentamt
European Patent Office
Office européen des brevets

(11) Publication number: 0 375 200 A2

# (12) EUROPEAN PATENT APPLICATION

(21) Application number: 89312711.8

(22) Date of filing: 06.12.89

(51) Int. Cl.5: C08F 210/00, C08F 297/06, C08F 210/18, C08F 4/68

(30) Priority: 07.12.88 US 281243

(43) Date of publication of application: 27.06.90 Bulletin 90/26

(84) Designated Contracting States: AT BE CH DE ES FR GB GR IT LI LU NL SE

(71) Applicant: EXXON CHEMICAL PATENTS INC.
200 Park Avenue
Florham Park New Jersey 07932(US)

(72) Inventor: Kresge, Edward Nathan
68 Parlin Lane
Watchung New Jersey 07060(US)
Inventor: Datta, Sudhin
30 Briarwood Drive
Matawan New Jersey 07747(US)

(74) Representative: Dew, Melvyn John et al
Exxon Chemical Limited Exxon Chemical
Technology Centre P.O. Box 1
Abingdon Oxfordshire, OX13 6BB(GB)

## (54) Functionalized alpha-olefin copolymers having narrow molecular weight distribution.

(57) The present invention relates to novel alpha-olefin copolymers having both a molecular weight distribution less than 2.0 and compositional segmentation of copolymerized polar functonalities, and to the process for preparing these copolymers.

EP 0 375 200 A2

# FUNCTIONALIZED ALPHA-OLEFIN COPOLYMERS HAVING NARROW MOLECULAR WEIGHT DISTRIBUTION

## BACKGROUND OF THE INVENTION

### Field of the Invention

This invention relates to functionalized alpha-olefin copolymers having narrow molecular weight distribution, and optionally, having the functionalities that provide the functionalization segmented such that substantially all of said functionalities occur within one or two of three segments of said copolymer, each segment constituting about one-third of the copolymer. The invention additionally relates to the process for making the functionalized copolymers.

### Discussion of Background and Material Information

Polymers prepared from alpha-olefins using Ziegler catalysts have found acceptance for use in a wide range of applications including elastomers, fibers and films. Inasmuch as the polymers are essentially nonpolar, however, they have a characteristic inertness which makes them difficult to surface treat, for example, by dyeing or metallizing techniques. Additionally, they are limited in the amount of additives, such as stabilizers and plasticizers which they can accommodate without "blooming". Similar limitations are found in the rubbery copolymers and terpolymers produced from alpha-olefins.

In an attempt to overcome these disadvantages, efforts have been made to introduce polar functional groups into such polyolefins, both homo and copolymers. Previous efforts in this direction have included both the direct incorporation of functionalized monomers during the polymerization process as well as post-polymerization functionalization of polymers.

Post-polymerization techniques for the treatment of olefin polymers to introduce polar groups are well known. For example, the polymer may be oxidized or it may be irradiated with subsequent contacting of the polymer with an unsaturated polar monomer. Similarly, methods of sulfonating the olefin polymers are well known. Among other things, however, these techniques are costly because they require additional treatment and recovery steps after polymerization.

Efforts have been made to incorporate polar monomers directly into the polymer using various techniques. U.S. Patent No. 3,492,277 discloses a method for forming a complex of a polar monomer containing a labile hydrogen, as in $-NH_2$, -COOH or -OH, by contacting the polar monomer in an inert hydrocarbon solvent with an organoaluminum compound at a molar ratio of polar monomer to organoaluminum compound of from 1:1 to 1:3, and then heating the solution to between 60° C and 150° C. The method disclosed is alleged to be useful with a wide range of monomers including those having polar groups such as $-COOR'$, -CHO, -SH and $-SO_3H$. Random and block copolymerizations are suggested. Molecular weight distribution is as normally found for such copolymerizations and the suggestion is made that modification is achieved by such as thermal degradation or the addition of hydrogen.

U.S. Patent No. 4,423,196 discloses a method of incorporating acyclic polar monomers into an alpha-olefin copolymer using an aluminum compound of the formula $A1R_nX'_{(3-n)}$ wherein R is a $C_1$-$C_{18}$ alkyl group, $X'$ is halogen and $0 < n \leq 3$. The polar monomer is contacted at room temperature with one mole of organoaluminum compound, and then allowed to react for 1 hour at 70° C. Polymerization is then carried out in a stirred tank reactor using $TiC1_3$ as the Ziegler catalyst. Polymerization is carried out at about 20° C to 100° C and preferably about 60° C to 90° C. The resulting polymers are said to have improved dyeability and antistatic properties coupled with good adhesion and printability along with better miscibility with other polymers.

U.S. Patent 3,796,687 discloses the preparation of ethylene-alpha-olefin-nonconjugated diene terpolymers having functional groups, the preparation using as a fourth monomer a polar compound of the formula:

$CH_2 = CH-(CH_2)_n-Y$ wherein n is an integer from 0 to 20 and Y is a functional group which can be

$-CO_2R$, - 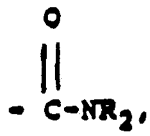, - CN , 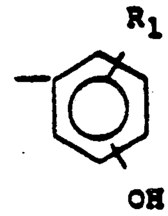

and - $SO_2C1$ wherein R is H, alkyl, aryl or cycloalkyl containing 1 to 18 carbon atoms and $R_1$ is either R or OR. Other polar compounds disclosed include bridged ring compounds (substituted norbornene) and substituted aromatic compounds. The substituents include those described above as well as alcohols. The polymerization catalyst comprises a vanadium compound and an organoaluminum cocatalyst in conjunction with a halogenated compound (e.g., hexachloropropylene) as catalyst reactivator. The polymerization is conducted by dissolving ethylene and a comonomer alpha-olefin in the reaction solvent, the alkylaluminum compound is then added, followed by addition of the unsaturated functional monomer and any diene, then any catalyst reactivator and finally the vanadium compound. Ethylene and other gaseous monomers are continuously swept through the reaction solution. Functional monomer content will constitute up to 0.1-10 mole percent of the product.

U.S. Patents 3,884,888, 3,901,860 and 4,017,669 are related to U.S. Patent No. 3,796,687 and have substantially the same disclosures. U.S. Patent 3,884,888 is directed to EPDM which contains a fourth monomer, a bridged ring compound, e.g., norbornene substituted with a group defined as being $-(CH_2)_n-Z$ where n is 0 to 20 and Z is:
$-NH_2$, -COOH,

$-\overset{O}{\overset{\|}{C}}-NH_2$ and -CN.

U.S. Patent 3,901,860 is directed toward EPDM wherein the substituent is similar to that of U.S. Patent 3,884,888 except that Z is COOH. U.S. Patent 4,017,669 claims as the fourth monomer the same bridged ring structure of U.S. Patent 3,884,888 and U.S. Patent 3,901,860 except that the substituent is $-(CH_2)_n-$COOR, wherein n is 0 to 20 and R can be alkyl, aryl or cycloalkyl.

U.S. Patent No. 3,761,458 discloses a process applicable to alpha-olefin containing polar monomers in which the polar groups are separated from the alpha-olefin by two or more carbon atoms. The polar monomer can contain more than one polar group. The polar group can be one of the amino, cyano, phosphine, (hydrocarb)oxy, metal- metalloid-containing groups, as well as metal salts of acid groups such as -COOH, $-SO_3H$, -PO(OR)OH, carboxyl groups or hydrocarbyl sulfide groups. An essential component of the catalyst system is the halide or alkoxyhalide of a transition metal, e.g., $TiC1_3$. The preferred cocatalyst is an aluminum alkyl. Other catalysts include vanadium trichloride, zirconium tetrachloride, etc. The aluminum compound has the formula $A1R_3$ or $RR'AlX$ wherein R is hydrocarbyl, $R'$ is H or hydrocarbyl and X is halogen, H, alkoxy, aryloxy, etc. All monomers and catalyst components are added to the reactor and there is no preference as to order of addition of the monomers.

U.S. Patent No. 4,139,417 discloses amorphous copolymers of mono-olefins or of mono-olefins and nonconjugated dienes with unsaturated derivatives of imides. The polymer comprises about 99.9 to 80 weight percent of non-polar units derived from at least two mono-olefins containing 2 to 18 carbon atoms, particularly ethylene and propylene, and optionally one more nonconjugated diene. In the preparation of the polymer the imide is complexed with a Lewis acid, e.g., alkylaluminum dihalides, aluminum trihalides, boron halides, nickel halides. Catalyst systems which are disclosed as being particularly suitable for the preparation of the copolymers are formed by the association of an organoaluminum compound with titanium, vanadium, tungsten or zirconium derivatives, e.g., halides or oxyhalides. Copolymerization is carried out in a stirred tank reactor. Continuous process is suggested where flow rates are to be maintained to achieve desired copolymer concentration in the reaction mixture. The resulting copolymers may be substantially linear copolymers with a statistic distribution of the units of which composed.

Additionally, it is known that the usefulness of certain alpha-olefin polymers, particularly the ethylene-alpha-olefin copolymers and diene-including terpolymers, depends upon the cure rate and cure state. The physical characteristics of cured polymer, i.e., mechanical strength and modulus, will depend upon the rate of cure and the nature of the cured state achieved. At any given composition, ethylene-alpha-olefin polymers with a high molecular weight and a narrow molecular weight distribution cure efficiently and therefore have excellent physical properties. U.S. Patent 4,722,971 discloses ethylene-propylene polymer compositions having improved properties and consisting of two fractions, the larger of which has a narrow molecular weight distribution ("MWD") as obtained by Ziegler polymerization by a single catalyst species in

a continuous flow stirred tank reactor. The narrow MWD obtained is said to be about a most probable distribution, that is, 2-6.5, preferably 2-4.5, more preferably 2-3.5.

As indicated by the foregoing there is a continuing need for novel functionalized alpha-olefin copolymers, particularly for those having particular compositional characteristics that will improve their utility. It is thus an object of the instant invention to provide novel functionalized alpha-olefin polymers, that, in addition to the useful properties provided by the inclusion of functionalities in these polymers, further have improved handling properties provided by molecular weight distribution and, improved reactivity and compatibility properties provided by the location of the functionalities substantially within one or both terminal segments of the copolymers.

## SUMMARY OF THE INVENTION

According to the invention, there is provided functionalized alpha-olefin polymers of narrow molecular weight distribution, less than 2.0, having polar functionalities, optionally segmented, consisting of one or more selected from the group consisting of carboxylic acid, hydroxyl and primary or secondary amino functional groups. Also according to this invention is provided a method of preparation for these polymers comprising the copolymerization of alpha-olefins, with or without diene monomers, with selective incorporation of masked, polar monomers, in the presence of a Ziegler-Natta catalyst in a process substantially free of back-mixing of the introduced reactants.

## BRIEF DESCRIPTION OF DRAWINGS

The accompanying drawing depicts, for illustration purposes only, processes embodied by the present invention, wherein Fig. 1 is a schematic representation of a process for producing polymer in accordance with the present invention.

## DESCRIPTION OF THE INVENTION

It has been discovered that novel ethylene-alpha-olefin copolymers having narrow molecular weight distribution and advantageous arrangement of polar functionalities can be prepared utilizing copolymerizable masked, polar monomers along with the ethylene and alpha-olefin monomers in a Ziegler-Natta polymerization process.

The instant invention is thus directed in its major embodiment to a functionalized elastomeric polymer having a molecular weight distribution less than 2.0 and comprising up to 5 milliequivalents per 100 grams of said polymer of at least one functionality selected from the group consisting of:

$-C(O)OH$, $-C(H_2)OH$ and $-NH(R_1)$

wherein $R_1$ may be hydrogen, or a hydrocarbyl radical, containing from 1 to 20 carbon atoms. By virtue of the specific process for making this functionalized elastomeric polymer, the polymer can be prepared such that substantially all of said functionality occurs within at least one segment A, but not more than two a segments, of the polymer, segments A and B of the polymer each making up from 30 to 50 wt.% of that polymer, the sum of A and B segments being 100 wt.%. B is that segment not containing said functionality. This occurrence of the functionality in one or more segments is preferentially directed to occurrence in either the A segment, in an A-B polymer, or in both A segments in an A-B-A polymer. This preferential location of functionality will be referred to throughout as compositional "segmentation" of the polymer and the preferred polymer will be referred to occasionally throughout the specification as a "segmented" functionalized polymer.

The "functionalized elastomeric polymer" of this invention comprises ethylene-containing elastomeric polymers that have been copolymerized with one or more polar-group-containing functional monomers. As applied to the polymers of this invention, the terms "elastomeric" or "elastomer" are defined to mean that when they are cross-linked, they are capable of recovering from large deformations quickly and forcibly. Free from diluents, the cross-linked polymers retract within one minute to less than 1.5 times their original lengths after being stretched at 18°C-29°C to twice their lengths and held for one minute before release.

However, these polymers are used in the process of this invention in an uncured state.

Typically elastomers are "substantially amorphous", and when that term is used to define the ethylene-containing elastomeric polymers of this invention, it is to be taken to mean having a degree of crystallinity less than 25%, preferably less than about 15%, and more preferably less than about 10% as measured by means known in the art. The three major known methods of determining crystallinity are based on specific volume, x-ray diffraction, and infra-red spectroscopy. Another well-established method, based on measurement of heat content as a function of temperature through the fusion range, is now easily carried out using differential scanning calorimetric measurements. It is known that these independent techniques lead to good experimental agreement.

Additionally, it is known in the art that the tendency of a particular combination of catalyst system and monomers to produce "blocky", random, or alternating polymers can be characterized by the product of the reactivity ratios defined for the given monomers under the specific reaction conditions encountered. If this product is equal to 1.0, the sequence distribution will be perfectly random; the more the product is less than 1.0, the more the monomers will approach alternating sequence; and, the more the product is greater than 1.0, the more the monomers will tend to have a "blocky" sequence distribution. Generally speaking, the segments of a polymer which crystallize are linear segments which have a number of identical (both by chemical make-up and stereo-specific orientation) units in a row. A combination of such segments are said to yield "blocky" polymer. If there is little or no such sequential order within the segments making up a polymer chain, that chain will be very unlikely to conform itself into the correct shape to fit into the spatial order of a crystal and will accordingly exhibit a low degree of crystallinity. The ethylene-containing elastomeric polymers of this invention, accordingly, have a reactivity ratio product less than 2.0, preferably less than about 1.5, and more preferably less than about 1.25, and are substantially amorphous.

These ethylene-containing elastomeric polymers generally have an ethylene content that can range from about 15 to 85 wt.% of the total polymer, preferably about 30 to 85 wt.%, most preferably about 40 to 80 wt.%.

The ethylene-containing elastomeric polymer of this invention will also include one or more higher mono-olefins, particularly alpha-olefins, having from 3 to 25 carbon atoms, preferably propylene. The higher mono-olefins suitable for use may be branched or straight chain, cyclic and aromatic substituted or unsubstituted and are preferably alpha-olefins having from 3 to 16 carbon atoms. Illustrative non-limiting examples of preferred alpha-olefins are propylene, 1-butene, 1-pentene, 1-hexene, 1-octene and 1-dodecene. Mixed olefins can also be used (e.g., propylene and 1-butene, mixed butenes, etc.). The alpha-olefin is generally incorporated into the ethylene-containing elastomeric polymer in an amount of about 15 to about 85 wt.%, more preferably at about 15 to about 70 wt.% and even more preferably about 20 to about 60 wt.%.

The alpha-olefins, when substituted, should not be aromatic substituted on the 2-carbon position (e.g., moieties such as $CH_2=CH-\phi$ should not be employed), since such an aromatic group interferes with the subsequent desired polymerization. Illustrative of such substituted alpha-olefins are compounds of the formula $H_2C=CH-C_nH_{2n}-X'$ wherein n is an integer from 1 to 20 carbon atoms (preferably 1 to 10 carbon atoms), and $X'$ comprises aryl, alkylaryl or cycloalkyl. Exemplary of such $X'$ substitutes are aryl of 6 to 10 carbon atoms (e.g., phenyl, naphthyl and the like), cycloalkyl of 3 to 12 carbon atoms (e.g., cyclopropyl, cyclobutyl, cyclohexyl, cyclooctyl, cyclodecyl, cyclododecyl and the like), alkaryl of 7 to 15 carbon atoms (e.g., tolyl, xylyl, ethylphenyl, diethylphenyl, ethylnaphthyl and the like). Also useful are alpha-olefins substituted by one or more such $X'$ substituents wherein the substituent(s) are attached to a non-terminal carbon atom, with the proviso that the carbon atom so substituted is not in the 1- or 2-carbon position in the olefin. Included are the alkyl-substituted bicyclic and bridged alpha-olefins, of which $C_1$-$C_9$ alkyl substituted norbornenes are preferred (e.g., 5-methyl-2-norbornene, 5-ethyl-2-norbornene, 5-(2'-ethylhexyl)-2-norbornene and the like).

The ethylene-containing elastomeric polymer may also be formed of ethylene and one or more higher mono-olefins as described above, plus one or more polymerizable non-conjugated dienes. Non-conjugated dienes suitable for purposes of the present invention can be straight chain, hydrocarbon di-olefins or cycloalkenyl-substituted alkenes, having about 6 to about 15 carbon atoms, for example:

A. straight chain acyclic dienes, such as 1,4-hexadiene and 1,6-octadiene;

B. branched chain acyclic dienes, such as 5-methyl-1,4-hexadiene; 3,7-dimethyl-1,6-octadiene; 3,7-dimethyl-1,7-octadiene; and the mixed isomers of dihydro-myricene and dihydroocinene;

C. single ring alicyclic dienes, such as 1,3-cyclopentadiene; 1,4-cyclohexadiene; 1,5-cyclo-octadiene and 1,5-cyclododecadiene;

D. multi-ring alicyclic fused and bridged ring dienes, such as tetrahydroindene; methyltetra-hydroindene; dicyclopentadiene; bicyclo-(2.2.1)-hepta-2,5-diene; alkenyl, alkylidene, cycloalkenyl and cycloalkylidene norbornenes, such as 5-methylene-2-norbornene (MNB), 5-propenyl-2-norbornene, 5-isopropylidene-2-norbornene, 5-(4-cyclo pentenyl)-2-norbornene, 5-cyclohexylidene-2-norbornene and 5-vinyl-2-norbornene;

E. cycloalkenyl-substituted alkenes, such as allyl cyclohexene, vinyl cyclooctene, allyl cyclodecene, vinyl cyclododecene.

Of these, the preferred dienes are dicyclopentadiene, 1,4-hexadiene, 5-methylene-2-norbornene, and 5-ethylidene-2-norbornene. Particularly preferred dienes are 5-ethylidene-2-norbornene and 1,4-hexadiene. It will be apparent that a mix of such dienes can also be utilized. The content of the optional diene monomer in the ethylene-containing elastomeric polymer can be 0 to about 15 weight percent, and if used, preferably 0.5 to about 12 weight percent, and most preferably about 1.0 to about 6.0 weight percent.

The one or more functionalities that constitute in part the functionalized elastomeric polymer of this invention is provided by the incorporation with the ethylene-containing elastomeric polymer one or more polar functional groups. These polar functional groups will be carboxyl, hydroxyl, primary amino or secondary amino and are represented by the following formulae:

$-C(O)OH$, $-C(H_2)OH$ and $-NH(R_1)$

where $R_1$ is hydrogen or hydrocarbyl of from 1 to about 20 carbon atoms, preferably alkyl of from 1 to 5 carbon atoms, cycloalkyl of from 3 to 7 carbon atoms, and the like.

The content of polar functional groups incorporated in the functionalized elastomeric polymer will be that sufficient to effect the desired reactivity, compatibility functioning. Thus, the polar functional group-containing monomer is present in the functionalized elastomeric polymer in amount equal to at least 0.01 wt.% of the functionalized elastomeric polymer. The content will typically range up to about 5 milliequivalents per 100 grams of polymer ("meq/100 g.") as measured by infrared analysis, more preferably 0.5 to 4 meq/100 g., and most preferably 1 to 3 meq/100 g.

The molecular weight range of the functionalized ethylene-containing elastomeric polymers useful in this invention will typically range from about 5,000 to 1,000,000 weight average molecular weight ($M_w$), typically about 10,000 to 500,000 $M_w$, most typically about 15,000 to about 350,000 $MW_w$. Mooney viscosity ($ML_{1+8}$, 127 °C) will typically range from about 10 up to about 90, more typically about 20 to about 75.

The functionalised elastomeric polymers of this invention may be prepared by making use of some of the process conditions disclosed and taught in co-pending application EP-A-0295076 published on 14 December 1988, i.e. after the priority date hereof. In accordance with the disclosure of this co-pending application, ethylene, alpha-olefins, optional non-conjugated dienes and unsaturated functional monomers chemically "masked" by pre-reaction with certain non-halogenated organometallic compounds, can be copolymerized in a Ziegler-Natta polymerization reaction utilizing, e.g., vanadium, zirconium or hafnium catalysts with organoaluminum co-catalysts and conducted generally in solvent at temperatures ranging preferably from about 15-60 °C. The ethylene elastomers of this invention can then be produced by deashing the initially formed polymer by known methods utilizing various aqueous liquids, separating the resulting aqueous phase from the polymer-rich solvent phase and subsequently separating the polymer from the polymer-rich solvent phase.

More particularly, useful unsaturated functional monomers that are chemically reacted with non-halogenated organometallic compounds prior to Ziegler-Natta polymerization are those which contain carboxyl, hydroxyl, amino, imino, or carbonyl groups having the general formula:

$R_2(X)_n$

wherein $R_2$ is selected from ethylenically unsaturated hydrocarbyl radicals, and X is selected from the group consisting of carboxyl ($-C(O)OH$), hydroxyl ($-OH$) and amino ($-NHR'$) groups and carbonyl ($-C(O)R'$), and imino ($-C(R'')=NR'$) moieties, and wherein n is an integer of at least 1, preferably 1-4, and more preferably 1-2. $R'$ and $R''$ in the above X groups may be the same or different and can comprise H or hydrocarbyl (preferably H or saturated hydrocarbyl), e.g., of 1 to 15 carbon atoms, and preferably alkyl of 1 to 5 carbon atoms, cycloalkyl of from 3 to 7 carbon atoms, and the like. Exemplary of such amino groups are $-NH_2$ and alkyl amino groups, e.g., $-NHCH_3$, $-NHC_2H_5$, $-NHC_3H_7$, $-NHC_4H_9$, and the like. Exemplary of carbonyl groups are $-C(O)H$, and $-C(O)R'$, such as $-C(O)CH_3$, $-C(O)C_2H_5$, $-C(O)C_3H_7$, $-C(O)C_4H_9$, and the like. Exemplary of such imino groups are $-C=NH$, $-C=NCH_3$, $-C=NC_2H_5$, $-C-NC_3H_7$, $-C=NC_4H_9$, and the like. Where n is greater than 1, X may include one or more of the foregoing exemplary functional groups.

The ethylenically unsaturated hydrocarbyl radical $R_2$ typically consists of radicals derived from ethylene, alpha-olefins, 1 to 30 carbon atom-homologues of alpha-olefins, norbornene and 1 to 30 carbon atom alkyl-substituted homologues of norbornene. The substitution on the norbenyl radical can be at C-2 or C-7 position, as conventionally known, i.e., bicyclo-[2.2.1].hept-5-en-2-yl, or bicyclo [2.2.1]-hept-2-en-7-yl. $R_2$ preferably contains from 2 to 25 carbon atoms.

Preferred unsaturated functional monomers thus include:

a) 5-norbornene-2-methanol,

b) 5-norbornene-2-carboxaldehyde,

c) 5-norbornene-2-carboxy-(N-n-butyl) imine,

d) 5-norbornene-2-carboxy-(N-phenyl) imine,

e) 5-norbornene-2-methylamine

f) allyl alcohol,

g) allyl amine. Multiple functional monomers include 5-norbornene-2,3-dicarboxyaldehyde, 5-norbornene-2,3-di(carboxy-(N-phenyl) imine, 4-hydroxy-5-methyl carboxy-hex-1-ene. Mixtures of such monomers also may be utilized.

These unsaturated functional monomers may be prepared by conventional methods known in the art. For example, 5-norbornene-2-carboxy (N-n-butyl) imine can be formed, by a Diels Alder addition of cyclopentadiene to vinyl acrolein, followed by reaction of the resulting 5-norbornene-2-carboxaldehyde with n-butyl amine:

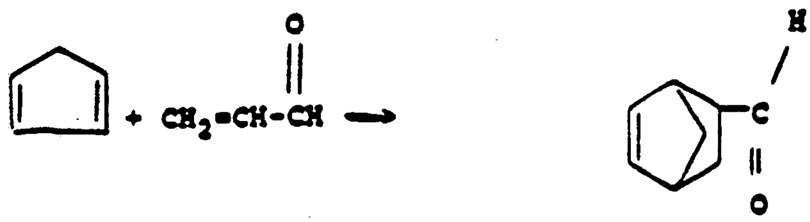

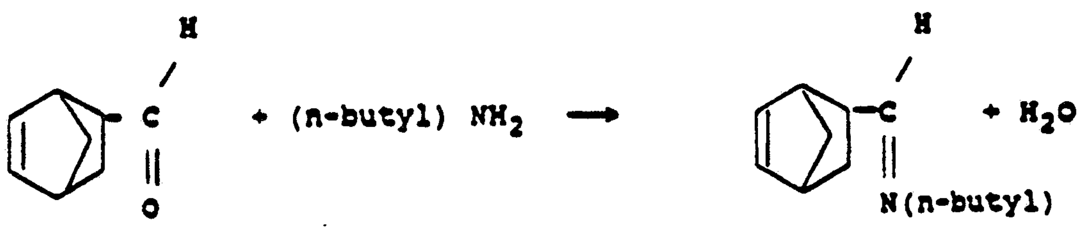

Exemplary of the masking agents disclosed to be effective in masking the unsaturated functional monomers include at least one of the non-halogenated organometallic compounds selected from the group represented by the formula:

$M\text{-}(Y)_r$

wherein M is a member selected from Group IIA, IB, IIB, IIIA, IVA, and the transition metals and elements, r is an integer from 1 to 4 and is selected so as to satisfy the valence for metal M, and Y is at least one of $R_4$, $R_5$ $R_6$ and $R_7$, wherein $R_4$-$R_7$ are (preferably independently) selected from the group consisting of hydrogen and $C_1$- $C_{16}$ hydrocarbyl and $C_1$-$C_{16}$ hydrocarbyloxy, which may or may not contain unsaturation, including $C_1$-$C_{16}$ alkyl, $C_6$-$C_{16}$ aryl, $C_1$-$C_{16}$ alkoxy, and $C_6$ to $C_{16}$ aryloxy, provided that at least one of $R_4$-$R_7$ is not hydrogen.

Suitable organometallic compounds include diethyl-zinc, triethyl aluminum, triisobutyl aluminum, diisobutyl aluminum hydride, diethyl aluminum hydride, trimethyl aluminum, ethyl aluminum dihydride, dipropyl zinc, propyl zinc hydride, diethoxy aluminum hydride, trimethoxy aluminum, sodium alkyls (e.g., $NaCH_3$, $NaC_3H_7$, methyl magnesium hydride, dimethyl [bis(cyclopentadienyl)] titanium, with triisobutylaluminum, triethylaluminum, and diisobutyl aluminum hydride being most preferred. Generally speaking, the organoaluminum compounds are preferred over organomagnesium compounds which are in turn preferred over organozinc compounds.

The masking agent and the unsaturated functional monomer are preferably contacted in an amount sufficient to provide from about 0.3 to 3, more preferably from about 0.6 to 2, and most preferably from about 0.8 to 1.5 (e.g., from about 0.95 to 1.05) moles of the masking agent per equivalent of the unsaturated functional monomer. As used in this masking process, "equivalent" refers to the mole of the unsaturated functional monomer multiplied by the number of functional "X" group(s) in it. For example, if a given unsaturated functional monomer contains two X groups per molecule, 1 mole of such is equal to 2 unsaturated functional monomer equivalents.

The masking reaction, which can be performed in a batchwise, continuous or semi-continuous manner, is preferably carried out by adding the unsaturated functional monomer to the selected metal alkyl masking agent, preferably in the presence of an inert solvent or diluent. The masking agent and unsaturated functional monomer should be contacted under substantially anhydrous and oxygen-free conditions and for

a time effective to form the corresponding masked, unsaturated functional monomer without substantial degradation of the unsaturated functional monomer. As used herein, the term "degradation of the unsaturated functional monomer" is intended to include side-reactions of the unsaturated functional monomer and any component of the masking reaction mixture, such as unsaturated functional monomer alkylation, rearrangement and prepolymerization, which decrease the yield of masked, unsaturated functional monomer obtained in contacting the selected unsaturated functional monomer and masking agent. Preferably, the selected unsaturated functional monomer and masking agent should be contacted at a temperature and for a time sufficient to form the masked, unsaturated functional monomer in essentially quantitative yields; that is, in yields of the masked, unsaturated functional monomer of at least about 95%, more preferably at least about 97%, and most preferably at least about 99%, based on the unsaturated functional monomer fed to the masking reactor.

The masking reaction should be performed in a reaction zone cooled to maintain the reactants at a temperature of less than 60° C (e.g., less than about 50° C), generally less than about 30° C, more generally from about -70° C to +30° C, e.g., from about -20° C to +20° C, and most preferably from about -15° C to +10° C. The pressure employed in the masking reactor is not critical, and any convenient pressure can be employed, e.g., from about 0.05 to 20,000 KPa. Generally, the unsaturated functional monomer and masking agent will be contacted for the masking reaction for a time of from about 0.001 to 10 hours, preferably from about 0.2 to 3 hours.

The masking reaction may be conveniently carried out under an inert gas (such as $N_2$, Ar, He), to exclude the presence of air in the masking reaction zone. Any solvent useful for Ziegler-Natta polymerization can be employed in the masking reaction provided the choice of solvent does not lead to degradation of the monomer as defined above. For example, suitable solvents include hexane, butane, pentane, heptane, cyclopentane, cyclohexane, cycloheptane, methyl cyclopentane, methyl cyclohexane, isooctane, benzene, toluene, xylene, chlorobenzene, tetrachloroethylene and dichloroethane.

The product mixture produced in the masking reaction, containing the masked, unsaturated functional monomer, desirably should be maintained at a temperature of less than 60° C (e.g., less than about 50° C), preferably less than about +30° C, preferably from about -70° C to +30° C, and more preferably from about -20° C to +20° C, until the masked monomer is contacted for polymerization with the ethylene, alpha-olefin(s), and, optionally, non-conjugated diene(s) or diolefin(s).

In a preferred embodiment, the masked, unsaturated functional monomer prepared with one of the alkyl-substituted masking agents is reacted with a lower alkanol, e.g., isopropyl, isobutyl or t-butyl alcohol. This results in the formation of an alkoxy radical that is derived from the reactant alkanol bonded to the metal component of the masking agent now complexed in the masked, unsaturated functional monomer. The alcohol-modified masked monomers have increased solubility in heptane and thus are particularly useful.

Thus, the functionalized elastomeric polymer of this invention may be formed by polymerizing ethylene, one or more alpha-olefins and optionally, one or more dienes, with the masked, functional group-containing monomers in the presence of a polymerization catalyst. Catalyst systems to be used in carrying out processes in accordance with the present invention may be Ziegler catalysts, which my typically include:

(a) a compound of a transition metal, i.e., a metal of Groups I-B, III-B, IVB, VB, VIB, VIIB and VIII of the Periodic Table, and

(b) an organometal compound of a metal of Groups I-A, II-A, II-B and III-A of the Periodic Table.

The preferred catalyst system in practicing processes in accordance with the present invention comprises hydrocarbon-soluble vanadium compound in which the vanadium valence is 3 to 5 and organo-aluminum compound, with the proviso that the catalyst system yields essentially one active catalyst species as described above. At least one of the vanadium compound/organo-aluminum pair selected must also contain a valence-bonded halogen.

In terms of formulas, vanadium compounds useful in practicing processes in accordance with the present invention could be:

$\overset{O}{\overset{\|}{V}}\ Cl_x(OR)_{3-x}$

where

x = 0-3 and R = a hydrocarbon radical;

$VCl_4$;

$VO(AcAc)_2$,

where AcAc = acetyl acetonate;

$V(AcAc)_3$;

$VOCl_x(AcAc)_{3-x}$, (2)

where x = 1 or 2; and
$VCl_3.nB$,
where n = 2-3 and B = Lewis base capable of making hydrocarbon-soluble complexes with $VCl_3$, such as tetrahydrofuran, 2-methyl-tetrahydrofuran and dimethyl pyridine.

In formula 1 above, R preferably represents a $C_1$ to $C_{10}$ aliphatic, alicyclic or aromatic hydrocarbon radical such as ethyl (Et), phenyl, isopropyl, butyl, propyl, n-butyl, i-butyl, t-butyl, hexyl, cyclohexyl, octyl, naphthyl, etc. Non-limiting, illustrative examples of formula (1) and (2) compounds are vanadyl trihalides, alkoxy halides and alkoxides such as $VOClL_3$, $VOCl_2(OBu)$ where Bu = butyl, and $VO(OC_2H_5)_3$. The most preferred vanadium compounds are $VCl_4$, $VOCl_3$, and $VOCl_2(OR)$.

As already noted, the co-catalyst is preferably organo-aluminum compound. In terms of chemical formulas, these compounds could be as follows:
$AlR_3$,
$Al(OR')R_2$
$AlR_2Cl$,
$R_2Al\text{-}O\text{-}AlR_2$
$AlR'RCl$
$AlR_2I$
$Al_2R_3Cl_3$,
and
$AlRCl_2$,
where R and R′ represent hydrocarbon radicals, the same or different, as described above with respect to the vanadium compound formula. The most preferred organo-aluminum compound is an aluminum alkyl sesquichloride such as $Al_2Et_3Cl_3$ or $Al_2(iBu)_3Cl_3$.

In terms of performance, a catalyst system comprised of $VCl_4$ and $Al_2R_3Cl_3$, preferably where R is ethyl, has been shown to be particularly effective. For best catalyst performance, the molar amounts of catalyst components added to the reaction mixture should provide a molar ratio of aluminum/vanadium (Al/V) of at least about 2. The preferred minimum Al/V is about 4. The maximum Al/V is based primarily on the considerations of catalyst expense and the desire to minimize the amount of chain transfer that may be caused by the organo-aluminum compound (as explained in detail below). Since, as is known certain organo-aluminum compounds act as chain transfer agents, if too much is present in the reaction mixture the $M_w/M_n$ of the copolymer may rise above 2. Based on these considerations, the maximum Al/V could be about 25, however, a maximum of about 17 is more preferred. The most preferred maximum is about 15.

Inasmuch as the polymerization reaction used for purposes of the present invention is otherwise conventional, the polymerization reaction can be carried out at any temperature suitable for Ziegler catalysis such as a temperature of about -50° C to about 150° C, or preferably about 10° C to about 100° C and more preferably about 0° C to about 60° C. The pressure used in the polymerization process can vary from about 0 to KPa about 3000 KPa and preferably from about 20 KPa to about 1500 KPa; more preferably about 100 KPa to about 1000 KPa and 250 KPa to 100 KPa, most preferably about 300 KPa to about 600 KPa.

The masked, unsaturated functional monomer should not be premixed with any halogen-containing component of the polymerization catalyst (e.g. vanadium halide or organo-aluminum halide) and left to stand for any appreciable period of time to avoid degradation of the masked monomer. Preferably, the masked monomer is added to the polymerization reaction zone separately from the polymerization catalyst components, so as to first contact the polymerization catalyst in the presence of the other monomers, preferably under polymerization conditions.

Chain transfer agents for the Ziegler-catalyzed polymerization of alpha-olefins are well known and are illustrated, by way of example, by hydrogen or diethyl zinc for the production of EPM and EPDM. Such agents are very commonly used to control the molecular weight of EPM and EPDM produced in continuous flow stirred reactors. For the essentially single active species Ziegler catalyst systems used in accordance with the present invention, addition of chain transfer agents to a CFSTR reduces the polymer molecular weight but does not affect the molecular weight distribution. On the other hand, chain transfer reactions during tubular reactor polymerization in accordance with the present invention broaden polymer molecular weight distribution. Thus the presence of chain transfer agents in the reaction mixture should be minimized or omitted altogether. Although difficult to generalize for all possible reactions, the amount of chain transfer agent used should be limited to those amounts that provide copolymer product in accordance with the desired limits as regards MWD and compositional dispersity. It is believed that the maximum amount of chain transfer agent present in the reaction mixture could be as high as about 0.2 mol/mol of transition metal, e.g., vanadium, again provided that the resulting copolymer product is in accordance with the desired limits as regards MWD and compositional dispersity. Even in the absence of added chain transfer agent,

chain transfer reactions can occur because propylene and the organo-aluminum cocatalyst can also act as chain transfer agents. In general, among the organo-aluminum compounds that in combination with the vanadium compound yield just one active species, the organo-aluminum compound that gives the highest copolymer molecular weight at acceptable catalyst activity should be chosen. Furthermore, if the Al/V ratio has an effect on the molecular weight of copolymer product, that Al/V should be used which gives the highest molecular weight also at acceptable catalyst activity. Chain transfer with propylene can best be limited by avoiding excessive temperature during the polymerization as described below.

Any known diluent or solvent for the reaction mixture that is effective for the purpose can be used in conducting polymerization in accordance with the present invention. For example, suitable diluents or solvents would be hydrocarbon solvents such as aliphatics, cycloaliphatics, and aromatic hydrocarbon solvents, or halogenated versions of such solvents. The preferred solvents are $C_{12}$ or lower straight-chain or branched-chain, saturated hydrocarbons, and $C_5$ to $C_9$ saturated alicyclic or aromatic hydrocarbons, or $C_2$ to $C_6$ halogenated hydrocarbons. Most preferred are $C_{12}$ or lower straight-chain or branched-chain hydrocarbons, particularly hexane. Non-limiting illustrative examples of diluents or solvents are butane, pentane, hexane, heptane, cyclopentane, cyclohexane, cycloheptane, methyl cyclopentane, methyl cyclohexane, isooctane, benzene, toluene, xylene, chloroform, chlorobenzenes, tetra-chloroethylene, dichloroethane and trichloroethane.

Additionally, it is known to incorporate "branch suppressors" when diene monomers are included in polymerization to reduce branching. It is known in the art that certain Lewis bases, e.g., $NH_3$ are effective as branch suppressors. Additionally, certain alkoxy silanes, e.g., methyl silicate ($Si(OMe)_4$), ethyl silicate ($Si(OEt_4)$), etc., have been recently discovered to act as effective branch suppressors without reducing catalyst efficiency or reactivity. The particular amount of suppressor required to suppress branching will depend on the nature of the suppressor, the diolefin, the catalyst system, the Al/V ratio and the polymerization conditions. The use of excessive amounts of silicates will result in reduced catalyst activity. The silicate concentration can also be expressed in terms of Si/V mole ratio and can vary from about 0.1 to about 3.0. The vanadium and aluminum compounds can be added to the reactor either separately or premixed with one another. The silicates, optionally used as branching suppressors, should be added to the reactor separately and not in combination with any of the catalyst components in order to avoid reaction with the catalyst components and an alteration of their polymerization characteristics.

After polymerization, the polymerization reaction mixture is quenched at the exit of the reactor. This quenching can be accomplished by the introduction into the polymerization reaction mixture (e.g., in the reactor or into polymerization product effluent stream) of water, lower alkanol, or aqueous acid (e.g. aqueous HCl) as quench liquid, generally using from 1 to 30 moles of quench liquid per mole of total V and Al in the reaction mixture.

It has been found that the desired functionality group, i.e., X, incorporated into the functionalized elastomeric polymer as masked functional monomer, can be regenerated by removal of the masking metal, M, through use of conventional de-ashing techniques, wherein the quenched polymerization product, containing masked-functionalized polymer, the polymerization catalysts, and unreacted monomers, is contacted with an aqueous liquid, e.g., water, aqueous solutions containing mineral acids (e.g., HCl, HBr, $HNO_3$, $H_2SO_4$, $H_3PO_4$, and the like), aqueous solutions containing, mineral bases (e.g., caustic ammonia, sodium methoxide and the like) or mixtures thereof. The resulting hydrolysis reactions (hereinafter referred to as "de-ashing") liberate the metal masking agent and regenerates the functional group, thereby forming a functionalized polymer.

De-ashing to regenerate the functional group, can be conveniently accomplished by contacting the quenched polymerization product with from 0.3 to 3 volumes of water per volume of polymerization reactor effluent (in equivalent units); the water may optionally contain from 1 to 30 wt.% (e.g. 3 to 10 wt.%) of mineral acid(s). The mixture is contacted for a time and under conditions sufficient to de-ash the polymer and to regenerate the functional group. Generally, the contacting will be conducted for a time of from about 3 to 30 minutes, and a temperature of from about 0° C. to 85° C., with vigorous stirring. The use of an acidic aqueous liquid may be followed by one or more water washes of the separated polymer to remove residual amounts of the mineral acid. The 2-phase liquids resulting in the above steps will permit recovery of a polymer-containing upper liquid phase comprising the functionalized polymer and polymerization solvent or diluent, and an aqueous lower liquid phase containing the mineral acid, and aqueous soluble salts of the catalyst and masking agent metal(s). The aqueous layer will preferably also contain unreacted unsaturated functional monomer, due to the water solubility of the unsaturated functional monomer attributed by the heliographic nature of the "X" functionality.

The polymer may be recovered from the upper phase by flash evaporation followed by drying to remove residual water. The flashing technique can involve the addition of the quenched polymerization

product to a tank of hot water (50° C. to 100° C.) sprayed with steam to strip off the solvent and unreacted monomers. The polymer may be then dried by evaporation of water, generally at temperatures of from about 150° C. to 200° C., e.g., on a hot rubber mill.

Specifically, the segmented functionalised polymer of this invention may be prepared by utilising the masking procedures taught in co-pending EP-A-0295076, as described above, and then copolymerising the masked, polar monomers in specific sequence with non-polar monomers ethylene, alpha-olefin, and optionally, one or more diene monomers, in polymerisation processes such as those disclosed in U.S. Patent No. 4,540,753, (EP-A-0129414) the disclosure of which is incorporated herein by reference. As indicated therein the processes are carried out in a "mix-free reactor", that is, one in which substantially no mixing occurs between portions of the reaction mixture that contain polymer chains initiated at different times, i.e., substantially no "back-mixing," in a tubular reactor, substantially no mixing in an axial direction. Though the most preferred process will be conducted in a continuous flow tubular reactor, it will be apparent to those skilled in the art that similar results could be obtained by equivalent operation of either an agitated batch reactor or 3 or more continuous flow stirred tank reactors operated in series.

This polymerization process is conducted in such a manner and under conditions sufficient to initiate propagation of essentially all polymer chains substantially simultaneously. This is accomplished preferably by premixing the catalyst components outside of the reactor and aging this premixed catalyst system within a range generally of from about 0.1 second up to about 200 seconds, preferably 0.5-100 seconds, most preferably 1-50 seconds. The premixing and aging are typically to be accomplished at temperatures at about 40° C or below, preferably 25° C or below, most preferably about 15° C.

The temperature of the polymerization reaction mixture is to be controlled within the range as disclosed, to avoid overheating that could be caused by the large quantities of heat of reaction from polymerization. Feed pre-chill or appropriate heat exchange conditions are appropriate. Temperature control used to maintain the polymerization reaction temperature at any given point along the length of the tubular reactor is in accordance wtih the teaching of U.S. Patent 4,540,753.

Good radial mixing, as opposed to axial mixing, is important and is achieved by the use of residence time/flow rate control and optionally, radial mixing devices. Residence time can range from about 1 second up to as much as 3600 seconds, preferably 10-1800 seconds, most preferably 15-900 seconds.

With reference to the accompanying FIG.1, reference numeral 1 generally refers to a premixing device for premixing the catalyst components. For purposes of illustration, it is assumed that a functionalized copolymer containing ethylene and propylene with a masked, polar monomer is to be produced using as catalyst components vanadium tetrachloride and ethyl aluminum sesqui chloride. The polymerization is an adiabatic, solution polymerization process using hexane solvent for both the catalyst system and the reaction mixture.

The premixing device 1 comprises a temperature control bath 2, a fluid flow conduit 3 and mixing device 4 (e.g., a mixing tee). To mixing device 4 are fed hexane solvent, vanadium tetrachloride and ethyl aluminum sesqui chloride through feed conduits 5, 6, and 7, respectively. Upon being mixed in mixing device 4, the resulting catalyst mixture is caused to flow within conduit 3, optionally in the form of a coiled tube, for a time long enough to produce the active catalyst species at the temperature set by the temperature bath. The temperature of the bath is set to give the desired catalyst solution temperature in conduit 3 at the outlet of the bath.

Upon leaving the premixing device, the catalyst solution flows through conduit 8 into mixing zone 9 to provide an intimate mixing with hexane solvent and reactants (ethylene and propylene) which are fed through conduit 10. Any suitable mixing device can be used, such as a mechanical mixer, orifice mixer or mixing tee. For economic reasons, the mixing tee is preferred. The residence time of the reaction mixture in mixing zone 9 is kept short enough to prevent significant polymer formation therein before being fed through conduit 11 to tubular reactor 12. Alternatively, streams 8 and 10 can be fed directly to the inlet of reactor 12 if the flow rates are high enough to accomplish the desired level of intimate mixing. The hexane with dissolved monomers may be cooled upstream of mixing zone 9 to provide the desired feed temperature at the reactor inlet.

Tubular reactor 12 is shown with optional, intermediate feed points 13 and 14 where additional monomer (e.g., ethylene or propylene) and/or hexane can be fed to the reactor. As disclosed in U.S. Patent No. 4,540,753, these optional feeds would be used where desirable to control the compositional variation of the segmented functionalized polymer in terms of the ethylene and propylene content.

Feed stream 15 can be utilized to provide the copolymerizable masked, polar monomers when a segmented functionalized polymer having functionalities occurring within one terminal segment of the segmented polymer, an A-B polymer, is sought. Due to the substantial absence of reactant back-mixing, the segmented functionalized polymer will be an A-B polymer, segment B consisting only of copolymerized

ethylene and other non-polar monomers (in this example, propylene). The masked, polar monomers are incorporated only in the last formed segment, segment A, which will also comprise in part previously unreacted ethylene and non-polar monomers.

The resulting polymer is a segmented, functionalized elastomeric polymer wherein the ethylene, and other non-polar monomers, e.g., alpha-olefin and optional diene monomers, are randomly incorporated throughout the polymer and the masked polar monomers are incorporated only in the last formed, or terminal, segment.

As will be apparent to those skilled in the art, feed point 13 can be utilized to provide the copolymerizable masked, polar monomers during the initial formation of the polymer. The flow rate of the masked, polar monomer would be substantially less than that of the ethylene and other non-polar monomers. As the masked, polar monomer is substantially completely incorporated into the forming polymer, the subsequent segment or segments would form essentially free of the masked, polar monomer resulting in functionality in the initially formed segment only. Utilization of feed points 13 and 15 for the introduction of polar, masked monomer is used to form tapered functionalized elastomeric polymer wherein both the initially formed segment and the last formed segment contain polar functionality, while the intermediate formed segment can be constituted essentially free of the masked, polar functional groups and thus polar functionality. The selection of the specific positions of the feed points along the tubular reactor, in series stirred tank reactors, or of feed times for an agitated batch reactor is determined empirically and is within the skill in art given the disclosures herein.

The de-ashing steps as previously described are then undertaken. Polymer recover is accomplished as previously described or in accordance with the disclosure of U.S. patent No. 4,540,753.

The resulting random incorporation of the ethylene and other non-polar monomers, throughout the polymer, particularly in segments essentially free of the masked, polar monomers, provide the random compositional distribution necessary to attain the described elastomeric properties. The functionalized alpha-olefin copolymers of this invention are thus composed of non-polar elastomeric segments and polar moiety functionalized segments. Therefore, these copolymers differ in properties from conventional segmented polymers, block copolymers and polymer mixtures. They are useful as dyeing agents, polymer modifiers, compatibilizing agents and surface modifiers.

The following examples, wherein all parts and percentages are on a weight basis unless otherwise specified, and which include preferred embodiments as currently known, further illustrate the present invention.

Example 1

In this example the functional group carboxyl was introduced in a tubular reactor process into a last segment, constituting less than 20 wt.% of the total polymer.

Preparation of the Masked, Polar Monomer

To 103.5 gm (0.52 mole) of trisobutyl aluminum dissolved in about 1.5 liters of dry hexane was added at 0 °C, 72.2 gm (0.52 mole) of 5-norbornene-2-carboxylic acid dissolved in 400 ml of dry hexane. The reaction was exothermic and external cooling was required to maintain the desired temperature. The clear solution was added dropwise 19.9 gm (0.52 mole) of 2-propanol while maintaining the temperature at 0 °C. The total volume of the solution was made up to exactly 2.60 liters by addition of dry hexane. The reaction product was a solution containing (5-norbornene-2-carboxylate) (2-propoxy) (butyl) aluminum.

Polymerization Process

In a tubular reactor as described in Figure 1 polymerization was conducted under the following conditions

Temperature (exit from mixing zone 9) = 0 °C
Pressure (exit from mixing zone 9) = 300 kPa
Residence time (tubular reactor 12) = 5 seconds
Reactor was 35 cm of 3/8" OD tube plus plus remainder of 1" OD tube for a total volume of 125 ml.

Feeds:

At point 4 in Figure 1 at 10°C
- Vanadium tetrachloride = 2.22 gm/hr
- Ethyl aluminum sesquichloride = 11.41 gm/hr
- Hexane = 3.17 kg/hr

These materials had a residence time in the conduit 3 in Figure 1 of 8 seconds at 10°C.

At point 9 in Figure 1 at 0°C
- Ethylene = 220 gm/hr
- Propylene = 2000 gm/hr
- Hexane = 52.8 kg/hr

At point 15 in Figure 1 the volume of the tubular reactor equals 67.5 ml. as measured from the entrance. The feed at 15 was:
- Masked polar monomer solution (expressed as equivalent gm of 5 norbornene-2-carboxylic acid)

1A O gms/hr
1B 2.5 gms/hr
1C 5 gms/hr
1D 7.5 gms/hr

The polymerization was terminated 5 seconds after exiting the tubular reactor by injection of 15 times molar amount excess (based on moles Al and V) of 2-propanol.

| Results | | | | |
|---|---|---|---|---|
| Examples | Et wt.% (1) | Functionality(2) mmol/100 gms | Mw (3) | MWD |
| 1A | 39.8 | 0 | $100x10^3$ | 1.6 |
| 1B | 39.9 | 2.3 | $104x10^3$ | 1.5 |
| 1C | 40.2 | 2.8 | $110x10^3$ | 1.7 |
| 1D | 41.0 | 3.0 | $115.7x10^3$ | 1.8 |
| Note: | | | | |

(1) Ethylene content was determined by ASTM 1246
(2) Functionality content is the average millimoles of carboxyl groups in the polymer per 100 gms as determined by IR analysis.
(3) $M_w$ and MWD were measured by GPC.

## Example 2

In this example the functional group hydroxyl was introduced in a tubular reactor process into a last segment, constituting less than 20 wt.% of the total polymer.

### Preparation of the Masked, Polar Monomer

To 79.4 gm (0.405 mole) of trisobutyl aluminum dissolved in about 3 liters of dry hexane was added at 0°C, 53.6 gm (0.40 mole) of 5-norbornene-2-methanol in 400 ml of dry hexane. The reaction was exothermic and external cooling was required to maintain the desired temperature. The clear solution was diluted to 6 liters. The reaction product was solution of (5-norbornene-2-methoxy)(diisobutyl)aluminum.

### Polymerization Process

In a tubular reactor as described in Figure 1 polymerization was conducted under the following conditions

Temperature (exit from mixing zone 9) = 0° C
Pressure (exit from mixing zone 9) = 300 kPa
Residence time (tubular reactor 12) = 5 seconds
Reactor was 35 cm of 3/8" OD tube plus remainder 1" OD tube for a total volume of 125 ml.

Feeds:

At point 4 in Figure 1 at 10° C
- Vanadium tetrachloride = 2.22 gm/hr
- Ethyl aluminum sesquichloride = 11.41 gm/hr
- Hexane = 3.17 kg/hr

These materials had a residence time in the conduit 3 in Figure 1 of 8 seconds at 10° C.

At point 9 in Figure 1 at 0° C
- Ethylene = 220 gm/hr
- Propylene = 2000 gm/hr
- Hexane = 52.8 kg/hr

At point 15 in Figure 1, same position as in Example 1, the feed was:
- Masked polar monomer solution (expressed as equivalent gm of 5 norbornene-2-methanol)

2A O gms/hr
2B 2.23 gms/hr
2C 4.46 gms/hr
2D 6.69 gms/hr

The polymerization was terminated 5 seconds after exiting the tubular reactor by injection of 15 times molar amount excess (based on moles Al and V) of 2-propanol.

| Results | | | | |
|---|---|---|---|---|
| Examples | Et wt.% (1) | Functionality(2) mmol/100 gms | Mw (3) | MWD |
| 2A | 40.7 | 0 | $86x10^3$ | 1.5 |
| 2B | 42.3 | 1.4 | $94x10^3$ | 1.6 |
| 2C | 39.8 | 2.7 | $87x10^3$ | 1.6 |
| 2D | 40.1 | 4.5 | $100x10^3$ | 1.8 |
| Note: | | | | |

(1) Ethylene content was determined by ASTM 1246
(2) Functionality content is the average millimoles of carboxyl groups in the polymer per 100 gms as determined by IR analysis.
(3) $M_w$ and MWD were measured by GPC.

Example 3

In this example the functional group secondary amine (n-butyl amine) arboxyl was introduced in a tubular reactor process into a last segment, constituting less than 20 wt.% of the total polymer.

Preparation of the Masked, Polar Monomer

To 73 . 19 gm (0 . 59 mole) of 5-norbornene-2-carboxyaldehyde was added at 0° C, 43.8 gm (0.60 mole) of 1-butylamine in 650 ml of hexane. The mixture was cooled to 0° C and the aqueous layer separated. The hydrocarbon layer was dried at 0° C with 4 Angstroms molecular sieves (available from Union Carbide, NY, NY) and slowly added to 85.1 gm (60 mole) of diisobutyl aluminum hydride in 3 liters of dry hexane at 0° C. The clear solution was diluted to 6 liters.

Polymerization Process

In a tubular reactor as described in Figure 1 polymerization was conducted under the following conditions

Temperature (exit from mixing zone 9) = 0°C

Pressure (exit from mixing zone 9) = 300 kpa

Residence time (tubular reactor 12) = 5 seconds

Reactor was 35 cm of 3/8" OD tube plus remainder 1" OD tube for a total volume of 125 ml.

Feeds:

At point 4 in Figure 1 at 10°C

- Vanadium tetrachloride = 2.22 gm/hr
- Ethyl aluminum sesquichloride = 11.41 gm/hr
- Hexane = 3.17 kg/hr

These materials had a residence in the conduit 3 in Figure 1 of 8 seconds at 10°C.

At point 9 in Figure 1 at 0°C:

- Ethylene = 220 gm/hr
- Propylene = 2000 gm/hr
- Hexane = 52.8 kg/hr

At point 15 in Figuyre 1. This point is at a point at which the volume of the tubular reactor equals 67.5 ml. as measured from the entrance.

- Masked polar monomer solution (expressed as equivalent gm of 5 norbornene-2-carboxaldehyde)

3A O gms/hr

3B 2.2 gms/hr

3C 4.4 gms/hr

3D 6.6 gms/hr

The polymerization was terminated 5 seconds after exiting the tubular reactor by injection of 15 times molar amount excess (based on moles Al and V) of 2-propanol.

| Results | | | | |
|---|---|---|---|---|
| Examples | Et wt.% (1) | Functionality(2) mmol/100 gms | Mw (3) | MWD |
| 3A | 40.2 | 0 | $91 \times 10^3$ | 1.6 |
| 3B | 39.8 | 1.4 | $95 \times 10^3$ | 1.7 |
| 3C | 42.1 | 2.7 | $103 \times 10^3$ | 1.7 |
| 3D | 40.8 | 3.5 | $100 \times 10^3$ | 1.9 |
| Note: | | | | |

(1) Ethylene content was determined by ASTM 1246

(2) Functionality content is the average millimoles of carboxyl groups in the polymer per 100 gms as determined by IR analysis.

(3) $M_w$ and MWD were measured by GPC.

Various changes and modifications in the products and the process of this invention can be made without departing from the spirit and scope thereof. The various embodiments which have been disclosed herein were for the purpose of further illustrating the invention but were not intended to limit it.

**Claims**

1. A functionalised elastomeric polymer having a molecular weight distribution less than 2.0 and comprising up to 5 milliequivalents per 100 grams of the polymer of at least one functionality selected from the group consisting of:

-C(O)OH, -C($H_2$)OH and -NH($R_1$)
wherein $R_1$ may be hydrogen or a hydrocarbon radical containing from 1 to 20 carbon atoms.

2. The elastomeric polymer of claim 1 wherein said polymer is a segmented A-B or A-B-A polymer and wherein substantially all of said functionality occurs within at least one A segment constituting 30 to 50 wt% of said polymer.

3. The elastomeric polymer of claim 2 wherein said polymer is a segmented A-B polymer and substantially all of said functionality occurs within the A segment, said A segment constituting up to 50 wt% of said polymer.

4. The elastomeric polymer of any preceding claim comprising copolymerised ethylene and at least one alpha-olefin.

5. The elastomeric polymer of claim 4 wherein said alpha-olefin comprises propylene.

6. The elastomeric polymer of claim 4 or 5 additionally comprising a diene monomer.

7. The elastomeric polymer of claim 6 wherein said diene monomer is 1, 4-hexa-diene, 5-ethylidene-2-norbornene, or dicyclopentadiene.

8. The elastomeric polymer of any preceding claim which contains from 1 to 3 milliequivalents per 100g of the polymer, of said at least one functionality.

9. The elastomer polymer of any of claims 4 to 8 which comprises from 15 to 85 wt% of ethylene.

10. A process for the preparation of a functionalised elastomeric polymer according to any one of the preceding claims, comprising:-

A) providing masked, unsaturated functional monomers, obtainable by chemically reacting unsaturated functional monomers with non-halogenated organometallic compounds;

B) copolymerising in a Ziegler-Natta polymerisation reaction conducted in a mix-free reactor such that essentially all polymer chains are initiated substantially simultaneously, the masked, unsaturated functional monomer and at least two other monomers preferably ethylene and at least one alpha-olefin; and

C) de-ashing the reaction product of step B) to form the desired polymer having incorporated therein functional polymer units derived from the masked, functional monomer.

11. The process of claim 10 in which one of said other monomers comprises a diene monomer, wherein the diene monomer is copolymerised in step B).

12. A process according to claim 10 or 11 in which the copolymerisation step B) is performed:

(a) in at least one mix-free reactor system in which substantially no mixing occurs between portions of the reaction mixture that contain polymer chains initiated at different times,

(b) with essentially one active catalyst species,

(c) using at least one reaction mixture which is essentially transfer agent-free,

and which further comprises:

(d) conducting the copolymerisation in a manner and under conditions sufficient to initiate propagation of essentially all copolymer chains simultaneously, the copolymer chains produced being dispersed within the reaction mixture.

13. A process according to claim 12 wherein step (d) comprises:

(i) forming the active catalyst species by pre-mixing catalyst components and aging the pressurised catalyst components for at least 0.1 second, and

(ii) intimately mixing the active catalyst species with solvent and monomers such that the copolymer chains produced are dispersed within the reaction mixture.

Neu
Nouvellement

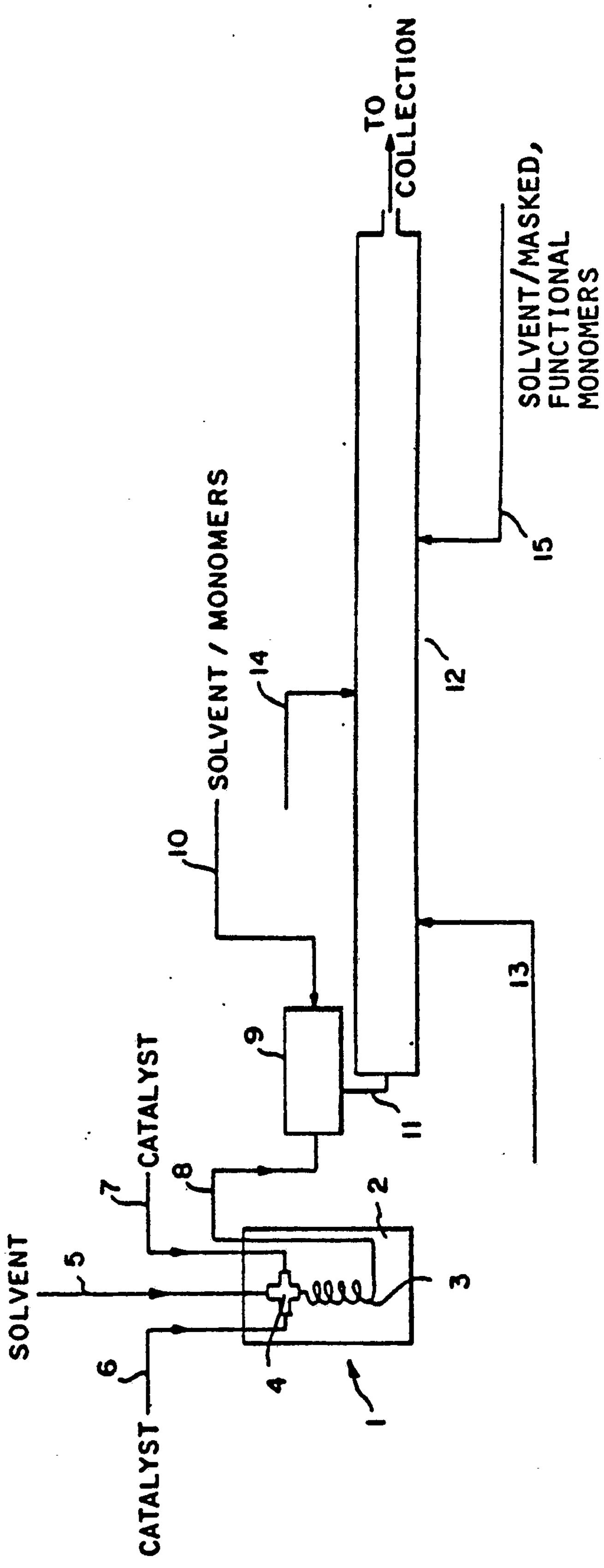


FIG. 1